# EUROPÄISCHE PATENTSCHRIFT

(11) **EP 1 088 401 B1**
(45) Veröffentlichungstag und Bekanntmachung des Hinweises auf die Patenterteilung: **05.03.2003**
(21) Anmeldenummer: 98936224.9
(22) Anmeldetag: 18.06.1998
(51) Int. Cl.: H04B 1/713, H04J 13/06

(54) **VERFAHREN UND VORRICHTUNG ZUR ÜBERTRAGUNG VON INFORMATIONEN IN VERSCHIEDENEN TRÄGERFREQUENZEN MITTELS EINES FREQUENZSPRUNGVERFAHRENS**
METHOD AND DEVICE FOR TRANSMITTING INFORMATION USING VARYING CARRIER FREQUENCIES BY MEANS OF A FREQUENCY HOPPING METHOD
PROCEDE ET DISPOSITIF A DIVERSITE EN FREQUENCE PORTEUSE DESTINES A LA TRANSMISSION D'INFORMATIONS PAR UN PROCEDE A SAUTS DE FREQUENCE

(43) Veröffentlichungstag der Anmeldung: 04.04.2001
(73) Patentinhaber: SIEMENS AKTIENGESELLSCHAFT, 80333 München (DE)
(72) Erfinder: KOCKMANN, Jürgen, D-48599 Gronau (DE); DICKER, Olaf, D-46459 Rees (DE)
(86) Internationale Anmeldenummer: DE9801681
(87) Internationale Veröffentlichungsnummer: WO99066650

(56) Entgegenhaltungen:
- EP-A- 0 182 762
- WO-A-96/00467
- DE-A- 3 415 032
- US-A- 5 471 503

## Beschreibung

Die vorliegende Erfindung bezieht sich auf ein Verfahren und eine Vorrichtung zur Übertragung von Informationen in verschiedenen Trägerfrequenzen mittels einem Frequenzsprungverfahren, die z.B. in eine Mobilstation und/oder eine Basisstation eines Mobilfunksystems implementiert sein können.

Als Verfahren zur Übertragung von Informationen bzw. Daten auf mehreren Trägerfrequenzen ist das sogenannte Frequency Hopping Spread Spectrum (Frequenzsprung-Streuspektrum)-System bekannt. Unter einem Frequency Hopping Spread Spectrum-System ist dabei ein System zu verstehen, bei dem zur Funkübertragung von Daten eine Vielzahl an Trägerfrequenzen bereitgestellt wird und die aktuell verwendete Trägerfrequenz in periodischen Abständen gewechselt wird. Insbesondere bei einem Zeitmultiplex(TDMA)-System kann ein Wechsel der Trägerfrequenz nach jedem Zeitschlitz oder Zeitrahmen der Zeitmultiplex-Übertragung erfolgen. Ein solches Frequency Hopping Spread Spectrum-System hat Vorteile dahingehend, daß die Energie der gesamten Funkübertragung über sämtliche Trägerfrequenzen verteilt wird. Dies ist insbesondere von Bedeutung, wenn ein allgemein verfügbares Frequenzband, wie beispielsweise das 2,4 GHz-ISM(Industrial, Scientific, Medical)-Band verwendet wird. Für dieses Frequenzband ist gemäß den einschlägigen Vorschriften (in den USA die FCC part 15) eine Obergrenze für die maximal pro Trägerfrequenz auftretende Energie festgelegt, um eine Störung anderer Teilnehmer so gering wie möglich zu halten. Für den Frequenzwechsel ist vorgeschrieben, daß innerhalb eines, Zeitraums von 30 Sekunden mindestens 75 unterschiedliche Frequenzen genutzt werden müssen. Weiterhin darf jede Frequenz in 30 Sekunden maximal 0,4 Sekunden lang genutzt werden. Im zeitlichen Durchschnitt müssen alle Frequenzen gleich verteilt genutzt werden.

Im DECT-Standard sind 24 Zeitschlitze, jeweils 12 für uplink und für downlink, in einem 10 ms-Rahmen definiert. Die FCC part 15 stellt jedoch nur eine Bandbreite von weniger als 1 MHz in dem ISM-Band zur Verfügung. Um dieses Erfordernis zu erfüllen, wurde die Anzahl der Zeitschlitze auf 12 Zeitschlitze in einem 10 ms Zeitrahmen reduziert, d.h. jeweils 6 Zeitschlitze für uplink und für downlink.

Mit 6 Zeitschlitzen für jede Richtung und unter Aufrechterhaltung des DECT-Zeitrahmens von 10 ms würde jeder Zeitschlitz eine Länge von 833 µs aufweisen. Die Zeitschlitze im DECT-Standard haben eine Länge von 417 µs. Bei einem langsamen Frequenzsprungsystem (Slow Frequency Hopping) ist ein inaktiver DECT-Zeitschlitz von 417 µs zwischen benachbarten aktiven Zeitschlitzen, in denen Daten übertragen werden, erforderlich. Damit sind bei derartigen Systemen nur jeweils 6 aktive Zeitschlitze in jeder Richtung zur Datenübertragung verwendet. Wenn derartige Systeme, die auf der Basis eines Slow Frequency Hopping arbeiten, auch im ISM-Band die Erfordernisse der FCC part 15 erfüllen sollen, muß wiederum ein inaktiver Blind-Zeitschlitz von 417 µs zwischen benachbarten aktiven Zeitschlitzen vorhanden sein. Dieser Blind-Zeitschlitz hat damit die halbe Länge eines vollen Zeitschlitzes von 833 µs, wodurch, wenn ein Basiszeitrahmen von 10 ms beibehalten wird, in jedem Rahmen vier aktive Zeitschlitze jeweils für uplink und für downlink bereitstehen, zwischen denen jeweils Blind-Zeitschlitze gesendet werden. Die vier aktiven Zeitschlitze haben jeweils eine Länge von 833 µs, während die Blind-Zeitschlitze jeweils eine Länge von 417 µs aufweisen. Bei diesem Aufbau kann weiterhin die Frequenzprogrammierung für das Frequency Hopping im nächsten folgenden aktiven Zeitschlitz am Ende des vorausgehenden aktiven Zeitschlitzes durchgeführt werden. Während den Blind-Zeitschlitzen kann dabei die programmierte Anfangsfrequenz im nächsten aktiven Zeitschlitz eingestellt werden.

Als Vorteil des Frequency Hopping Spread Spectrum-Systems ist zu nennen, daß durch das Bereitstellen einer großen Anzahl von Trägerfrequenzen das System unempfindlicher gegen Störungen wird. Darüber hinaus erhöht sich die Abhörsicherheit des Systems gegenüber Dritten, da der Dritte in der Regel nicht weiß, auf welche Trägerfrequenz nach einem gewissen Zeitraum gewechselt wird.

Die Sequenz an Trägerfrequenzen, die zur Übertragung nacheinander verwendet werden, wird durch einen Algorithmus ermittelt. Ein solcher Algorithmus ist in identischer Weise in der Feststation sowie jeder Mobilstation der Mobilfunkübertragung implementiert. Wenn somit ein Mobilteil mit der zugehörigen Feststation synchronisiert ist, werden das Mobilteil und die Feststation synchron miteinander die durch die Sequenz des Algorithmus vorgegebenen Trägerfrequenzwechsel vornehmen.

Probleme treten auf, wenn die Zahl der nutzbaren Trägerfrequenzen zeitlich nicht konstant ist. Dies ist beispielsweise der Fall, wenn eine als gestört erkannte Trägerfrequenz während einem bestimmten Zeitraum gesperrt und somit nicht zur Verwendung freigegeben ist, und beispielsweise nach einem bestimmten Zeitraum wieder zur Verwendung freigegeben wird. Auch bei einer solchen zeitlich schwankenden Anzahl an nutzbaren Trägerfrequenzen muß sichergestellt sein, daß beispielsweise die oben genannten FCC part 15-Vorschriften eingehalten werden.

Aus der EP-A-0 182 762, ist ein Verfahren in einem Telekommunikationssystem mit zwei Sende-/Empfangsstationen bekannt, das Trägerfrequenzen nach dem Frequencysprungverfahren auswählt, wobei neue Trägerfrequenzen aus einer Matrix mit Verfügbaren Frequenzen durch eine Generierung einer Sequenz von Zufallszahlen, die auf die Position einer jeweiligen Trägerfrequenz in der Matrix verweisen, und anhand von ebenfalls in der Matrix gespeicherten Statusinformationen zur jeweiligen Frequenz ausgewählt werden, so daß sie einem nächsten Schritt ausgelesen werden.

Aus der US-A-5 471 503 ist ein Verfahren zum Abtasten eines Empfangssignals in einem nach dem Frequenzsprungverfahren arbeitendem Telekommunikationssystem, bei dem jeder Kanal auf eine existierende Übertragung überprüft wird.

Die vorliegende Erfindung hat die Aufgabe, ein Verfahren und eine Vorrichtung zum Übertragen von Informationen in verschiedenen Trägerfrequenzen mittels einem Frequenzsprungverfahren bereitzustellen, bei denen ein einfaches und effektives Bereitstellen der Trägerfrequenzen gewährleistet ist.

Diese Aufgabe wird durch ein Verfahren und eine Vorrichtung zur Übertragung von Informationen in verschiedenen Trägerfrequenzen mittels einem Frequenzsprungverfahren gemäß den unabhängigen Ansprüchen gelöst. Vorteilhafte Weiterbildungen der vorliegenden Erfindung sind in den jeweiligen Unteransprüchen angegeben.

Gemäß der vorliegenden Erfindung wird eine Tabelle mit einer Anzahl von N möglichen Trägerfrequenzwerten fx in Adressen 1 bis N der Tabelle bereitgestellt. Weiterhin wird eine Sequenz von Zufallswerten erzeugt, auf deren Basis zumindest ein Teil M der N Trägerfrequenzwerte fx aus den entsprechenden Adressen der Tabelle ausgelesen wird, wobei M≤N. In den den Trägerfrequenzwerten entsprechenden Trägerfrequenzen werden daraufhin Informationen übertragen. Die erfindungsgemäße Vorrichtung kann beispielsweise eine Mobilstation oder auch eine Basisstation eines Mobilfunksystems sein.

Die erzeugte Sequenz von Zufallswerten wird in Adressenwerte zwischen 1 und N umgesetzt, mittels denen die Trägerfrequenzwerte fx aus der Tabelle ausgelesen werden.

Vorteilhafterweise wird zum Herstellen einer Verbindung z.B. zwischen Mobilfunkeinheiten, zuerst eine Trägerfrequenz abgetastet. Dann wird entschieden, ob während einem bestimmten Zeitraum eine bestimmte Nachricht auf dieser Trägerfrequenz empfangen wurde. Falls die Entscheidung negativ ist, wird eine neue Trägerfrequenz ausgewählt und diese neue Trägerfrequenz abgetastet. Falls die Entscheidung positiv ist, wird die Tabelle initialisiert und die Sequenz von Zufallswerten unter Verwendung der empfangenen bestimmten Nachricht erzeugt. Das ist insbesondere in einer Mobilstation eines Mobilfunksystems von Vorteil, der von einer Basisstation eine bestimmte Nachricht übermittelt wird, die es der Mobilstation ermöglicht, die Sequenz von Zufallswerten zum Auslesen der Trägerfrequenzwerte an der Adresse zu beginnen, an der sich die Mobilstation ebenfalls gerade befindet. Da in der Mobilstation und der Basisstation die gleiche Sequenz von Zufallswerten erzeugt wird, wird somit nachfolgend die gleiche Sequenz von Trägerfrequenzwerten aus der Tabelle ausgelesen. Das gleiche Verfahren wird zum Synchronisieren z.B. von Mobilfunkeinheiten verwendet, da hierbei beispielsweise eine Mobilstation ebenfalls eine Nachricht von der Basisstation benötigt, auf deren Basis sie an der gleichen Stelle der Zufalls-Sequenz fortfahren kann, Trägerfrequenzwerte aus der Tabelle auszulesen.

Vorteilhafterweise kann nur ein Teil M der N möglichen Trägerfrequenzwerte aus der Tabelle ausgelesen werden, wobei die restlichen N - M Trägerfrequenzwerte zum Ersetzen von gestörten Trägerfrequenzwerten der M Trägerfrequenzwerte verwendet werden.

Die Tabelle kann dabei beim Herstellen einer Verbindung z.B. zwischen Mobilfunkeinheiten, oder beim Synchronisieren z.B. von Mobilfunkeinheiten, vor dem Auslesen unter Ersetzen der Trägerfrequenzwerte, die gestörten Trägerfrequenzen entsprechend, aus den N - M Trägerfrequenzwerten aktualisiert werden. Im Falle einer Mobilstation kann diese beispielsweise von einer Basisstation, in der gestörte Trägerfrequenzen erfaßt wurden, eine Nachricht erhalten, welche Trägerfrequenzen gestört sind. Auf der Basis dieser Nachricht werden dann die gestörten Trägerfrequenzwerte durch nicht gestörte Trägerfrequenzwerte aus den N -. M Trägerfrequenzwerten aktualisiert. Auch in der entsprechenden Basisstation wird die Tabelle in der gleichen Weise aktualisiert. Es ist noch einmal hervorzuheben, daß die Basisstation und die Mobilstation jeweils die identische Tabelle und den identischen Algorithmus zur Erzeugung der Sequenz von Zufallswerten aufweisen.

Die oben erläuterten Verfahrensschritte sind in entsprechenden Einrichtungen in der erfindungsgemäßen Vorrichtung implementiert. Die erfindungsgemäße Vorrichtung zur Übertragung von Informationen in verschiedenen Trägerfrequenzen mit einem Frequenzsprungverfahren kann dabei beispielsweise in einer Mobilstation oder in einer Basisstation eines Mobilfunksystems implementiert sein.

Die Erfindung wird nun anhand eines Ausführungsbeispiels und bezugnehmend auf die begleitenden Zeichnungen näher erläutert. Es zeigen:
Fig. 1 ein Mobilfunk-Übertragungssystem mit einer erfindungsgemäßen Feststation,
Fig. 2 einen Zeitrahmen eines Datenübertragungsstandards, wie er bei der vorliegenden Erfindung anwendbar ist,
Fig. 3 detailliert den inneren Aufbau einer erfindungsgemäßen Basisstation,
Fig. 4 eine schematische Darstellung eines Frequency Hopping Spread Spectrum-Systems insbesondere auch für den Fall eines Störer-Ausweichmodus, und
Fig. 5 zeigt eine Tabelle, aus der Trägerfrequenzwerte auf der Basis einer Zufalls-Sequenz zufällig ausgelesen werden,
Fig. 6 zeigt ein Flußdiagramm, das ein Verfahren zum Herstellen einer Verbindung zwischen bzw. zum Synchronisieren von 2 Mobilfunkeinheiten darstellt,
Fig. 7 zeigt eine Tabelle, aus der nur ein Teil der Trägerfrequenzwerte auf der Basis einer Zufalls-Sequenz zufällig ausgelesen wird,
Fig. 8 zeigt ein Flußdiagramm, das ein Verfahren zum Herstellen einer Verbindung zwischen bzw. zum Synchronisieren von beispielsweise zwei Mobilfunkeinheiten darstellt, wobei gestörte Trägerfrequenzwerte durch nicht gestörte Trägerfrequenzwerte ersetzt werden können,
Fig. 9 zeigt eine Tabelle, aus der nur ein Teil der Trägerfrequenzwerte auf der Basis einer Zufalls-Sequenz zufällig ausgelesen werden,
Fig. 10 zeigt die Tabelle aus Fig. 9, wobei ein gestörter Trägerfrequenzwert aus den ausgelesenen Trägerfrequenzwerten durch einen nicht gestörten Trägerfrequenzwert ersetzt ist, und
Fig. 11 zeigt die Tabelle aus Fig. 10, wobei ein anderer gestörter Trägerfrequenzwert durch einen nicht gestörten Trägerfrequenzwert ersetzt ist.

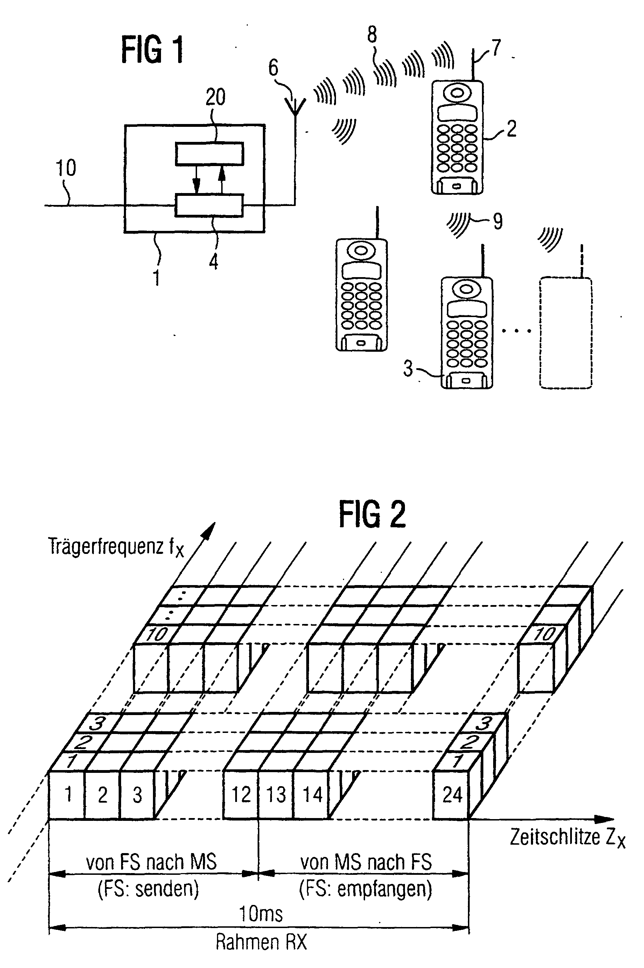

Bezugnehmend auf Fig. 1 soll zuerst der allgemeine Aufbau einer Mobilfunkübertragung erläutert werden. Wie allgemein üblich weist die Anordnung zur Funkübertragung von Daten eine Feststation 1 und mehrere Mobilteile (Mobilstationen), kabellose Telefone 2, 3 ... auf. Die Feststation 1 ist mit einer Endstellenleitung 10 mit dem Festnetz verbunden. Zwischen der Feststation 1 und der Endstellenleitung 10 können zur Kommunikation eine Schnittstellenvorrichtung vorgesehen sein, die nicht dargestellt ist. Die Feststation 1 weist eine Antenne 6 auf, mittels der beispielsweise über einen ersten Funkübertragungsweg 8 mit dem Mobilteil 2 oder über einen zweiten Funkübertragungsweg 9 eine Kommunikation mit dem Mobilteil 3 stattfindet. Die Mobilteile 2, 3 ... weisen zum Empfang bzw. zum Senden von Daten jeweils eine Antenne 7 auf. In Fig. 1 ist schematisch der Zustand dargestellt, in dem die Feststation 1 mit dem Mobilteil 2 aktiv kommuniziert und somit Daten austauscht. Das Mobilteil 3 befindet sich hingegen in dem sogenannten Idle Locked Modus, in dem es Stand-By-artig auf einen Anruf von der Feststation 1 her wartet. In diesem Zustand kommuniziert das Mobilteil 3 nicht im eigentlichen Sinne mit der Feststation 1, sondern es empfängt von der Feststation 1 vielmehr nur in periodischen Abständen die Daten beispielsweise eines Zeitschlitzes, um seine Trägerfrequenzen fx nachsynchronisieren zu können.

Der interne Aufbau der Feststation 1 ist in Fig. 1 schematisch dargestellt. Die Sprachinformationsdaten werden einem HF-Modul 4 zugeführt, das von einer Trägerfrequenz-Sequenzeinheit angesteuert wird. Der genaue Aufbau einer erfindungsgemäßen Feststation 1 wird später beschrieben.

Bezugnehmend auf Fig. 2 soll nunmehr ein Übertragungsstandard erläutert werden, wie er bei der vorliegenden Erfindung verwendet werden kann. Wie aus Fig. 2 ersichtlich, werden auf mehreren Trägerfrequenzen fx, von denen zehn dargestellt sind, zeitlich nacheinander Daten in mehreren Zeitschlitzen, im dargestellten Fall 24 Zeitschlitze Zx, in einem Zeitmultiplex-Verfahren TDMA (Time Division Multiple Access)übertragen. Im dargestellten Fall wird dabei im Wechselbetrieb (Duplex) gearbeitet, d. h., nachdem die ersten zwölf Zeitschlitze Zx gesendet worden sind, wird auf Empfang geschaltet, und es werden in der Gegenrichtung die zweiten zwölf Zeitschlitze (Z13 bis Z24) von der Feststation empfangen.

Für den Fall, daß der sogenannte DECT-Standard zur Übertragung verwendet wird, beträgt die zeitliche Dauer eines Zeitrahmens 10 ms, und es sind 24 Zeitschlitze Zx vorgesehen, nämlich zwölf Zeitschlitze für die Übertragung von der Feststation zu Mobilteilen und weitere zwölf Zeitschlitze Zx zur Übertragung von den Mobilteilen zu der Feststation. Gemäß dem DECT-Standard sind zehn Trägerfrequenzen fx zwischen 1,88 GHz und 1,90 GHz vorgesehen.

Natürlich eignen sich auch andere Rahmenstrukturen zur Verwendung bei der vorliegenden Erfindung, wie beispielsweise solche, bei denen die Zahl der Zeitschlitze pro Rahmen im Vergleich zu dem DECT-Standard halbiert ist.

Die vorliegende Erfindung findet insbesondere Anwendung für Übertragungen im sogenannten 2,4 GHz-ISM (Industrial, Scientific, Medical)-Frequenzband. Das allgemein zugängliche ISM-Frequenzband weist eine Bandbreite von 83,5 MHz auf. Über diese 83,5 MHz müssen gemäß der Vorschrift FCC part 15 mindestens 75 Trägerfrequenzen verteilt sein. Besonders vorteilhaft ist eine Aufteilung der Bandbreite von 83,5 MHz auf 96 Trägerfrequenzen, d. h. ein Kanalabstand von 864 kHz. Die oben genannten Frequenzbänder und Standards sind rein als Beispiel genannt. Grundsätzliche Voraussetzung für eine Anwendbarkeit bei der vorliegenden Erfindung ist es lediglich, daß ein sogenanntes Frequency Hopping Spread Spectrum verwendet wird, d.h. daß mehrere Trägerfrequenzen zur Verfügung stehen, und daß die zur Übertragung gewählte Trägerfrequenz von Zeit zu Zeit gewechselt wird. Für einen solchen Wechsel ist Voraussetzung, daß die Daten in Zeitschlitzen Zx übertragen werden (Zeitmultiplex-Verfahren). Geeignet ist also beispielsweise der DECT-Standard sowie jeder andere abgewandelte und auf diesem DECT-Standard basierende Standard.

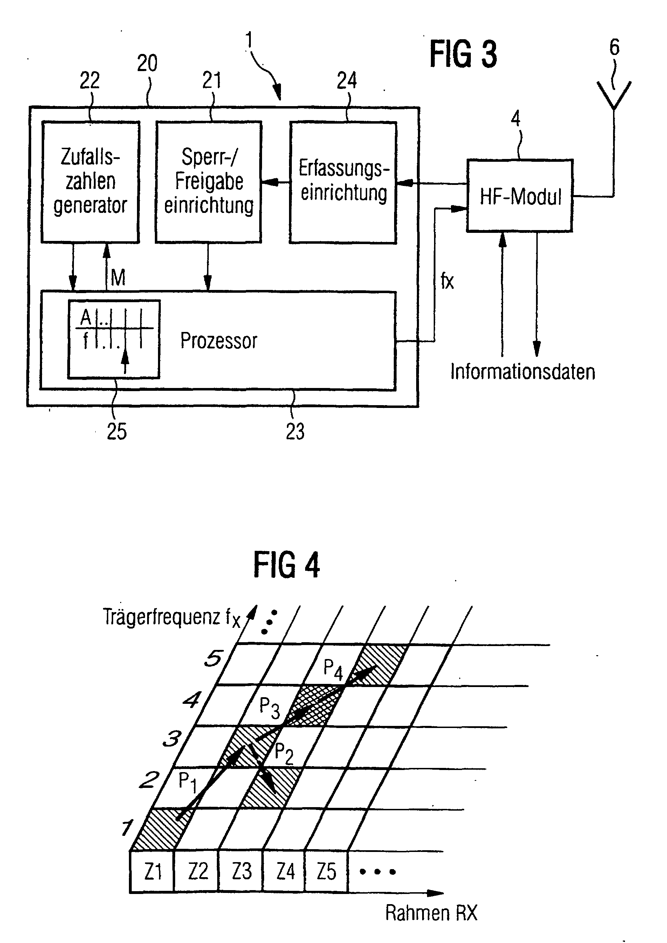

Bezugnehmend auf Fig. 3 soll nun der innere Aufbau einer erfindungsgemäßen Feststation 1 näher erläutert werden. Wie in Fig. 3 zu sehen, werden dem HF-Modul 4 Informationsdaten zugeführt, wenn von der Feststation 1 zu einem Mobilteil 2, 3.... mittels der Antenne 6 gesendet werden soll und von dem HF-Modul 4 werden Informationsdaten ausgegeben, wenn Daten von Mobilteilen empfangen werden. Das HF-Modul 4 moduliert die digitalen codierten Informationsdaten auf eine Trägerfrequenz fx. Die aktuell zu verwendende Trägerfrequenz fx wird dabei von einer Trägerfrequenz-Sequenzeinheit vorgegeben, die allgemein mit 20 bezeichnet ist. In der Trägerfrequenz-Sequenzeinheit 20 ist eine Erfassungseinrichtung 24 vorgesehen, der das demodulierte Signal von dem HF-Modul 4 zugeführt wird. Störung bedeutet dabei, daß entweder eine Störung im eigentlichen Sinne oder eine Belegung durch einen anderen Sender vorliegt. Eine Störung im Sinne der vorliegenden Beschreibung kann also dadurch erfaßt werden, daß ein empfangenes Signal auf einer Trägerfrequenz demoduliert wird und erfaßt wird, ob auf dieser Trägerfrequenz ein Signalpegel vorliegt oder nicht. Eine gestörte Trägerfrequenz ist also eine solche Trägerfrequenz, auf die ein Signal aufmoduliert ist, das einen bestimmten Schwellenwert überschreitet.

Alternativ kann zur Sperrung der A-CRC-Wert, der X-CRC-Wert, ein Synchronisationsverlust oder der RSSI-Wert herangezogen werden.

Die Erfassungseinrichtung 24 bestimmt also beispielsweise anhand des demodulierten Signals von dem HF-Modul 4, wie hoch der auf eine bestimmte Trägerfrequenz fx aufmodulierte Signalanteil ist. Falls der erfaßte Signalanteil über einem vorbestimmten Grenzwert liegt, gibt die Erfassungseinrichtung 24 ein Störungs-Erfassungssignal zu einer Sperr-/Freigabeeinheit 21. Abhängig von dem Störer-Erfassungssignal von der Erfassungseinrichtung 24 gibt die Sperr-/Freigabeeinheit 21 eine Sperrung-/Freigabeinformation zu einem Prozessor 23. Diese Sperr-/Freigabeinformation zeigt an, welche der Trägerfrequenzen fx aufgrund der Erfassung einer Störung durch die Erfassungseinrichtung 24 gesperrt bzw. wieder freigegeben sind, wie später erläutert werden wird.

Mittels der Erfassungseinrichtung 24 und der Sperr-/Freigabeeinrichtung 21 wird also eine unabhängige Prozedur geschaffen, durch die gestörte Frequenzen gesperrt und wieder freigegeben werden können. Neben den Sperr-Freigabeinformationen von der Sperr-/Freigabeeinheit 21 wird dem Prozessor 23 eine Sequenz von einem Zufallsgenerator 22 zugeführt. Aufgrund eines in dem implizierten Zufallsalgorithmus erzeugt der Zufallsgenerator 22 eine zufällig verteilte Abfolge an Trägerfrequenz-Werten innerhalb des nutzbaren Frequenzbandes. Der Zufallsgenerator 22 führt somit eine von der Prozedur der Frequenzsperrung für den Fall einer Störung unabhängige Prozedur aus. Der Prozessor 23 gibt schließlich ein Ansteuersignal zu dem HF-Modul 4, das den zu verwendenden Trägerfrequenz-Wert dem HF-Modul 4 vorgibt.

Der Prozessor 23 weist eine in einem Speicher vorgesehene Tabelle 25 auf, deren Funktion und Verwaltung später erläutert werden.

Bezugnehmend auf Fig. 4 soll nun die Betriebsweise einer Feststation 1 bzw. das Verfahren näher erläutert werden. Wie in Fig. 4 dargestellt wird beispielsweise während eines Rahmens Rx einer mobilen Funkübertragung eine Trägerfrequenz f1 verwendet, wie in Fig. 4 schraffiert dargestellt ist. Diese Frequenz f1 ist also der erste Wert der durch den Zufallsgenerator 22 erzeugten Sequenz, der dem Prozessor 23 zugeführt wird, der wiederum dementsprechend das HF-Modul 4 ansteuert. Für den Rahmen R2 sei angenommen, daß der Zufallsgenerator 22 aufgrund seiner berechneten Frequenz einen Frequenzsprung P1 auf eine Trägerfrequenz f3 vorschreibt.

Nunmehr sei der Fall angenommen, daß die Erfassungseinrichtung 24 beispielsweise bei einer vorherigen Übertragung erfaßt hat, daß die Trägerfrequenz f₂ gestört ist, und die Erfassungseinrichtung 24 also ein dementsprechendes Störsignal an die Sperr-/Freigabeeinheit 21 gegeben hat, die wiederum eine Sperrung der Frequenz f2 der dem Prozessor 23 angezeigt hat. Weiterhin sei angenommen, daß der Zufallsgenerator 22 anhand seiner ermittelten Sequenz für den Rahmen R3 die zuvor als gestört erfaßte Trägerfrequenz f2 vorschreibt. Ausgehend von der Koinzidenz der vorgeschriebenen Trägerfrequenz f2 gemäß der Sequenz des Zufallsgenerators 22 und gleichzeitig des Sperrsignals von der Sperr-/Freigab'eeinheit 21 für dieselbe Trägerfrequenz f2 ersetzt nun der Prozessor 23 die eigentlich vorgeschriebene, aber als gestört erfaßte Trägerfrequenz f2 für den Rahmen R3 durch eine von der Erfassungseinrichtung 24 als nicht gestört erfaßte Trägerfrequenz, beispielsweise die Trägerfrequenz f4, wie durch den Frequenzsprung-Pfeil P3 angezeigt ist. Anstelle der eigentlich durch die Sequenz vorgeschriebenen Trägerfrequenz 2 wird also das HF-Modul 4 auf die Ersatz-Trägerfrequenz f4 angesteuert. Durch Ersetzen der als gestört erfaßten Trägerfrequenz wird also eine modifizierte Sequenz an Trägerfrequenzen geschaffen. Die modifizierte Sequenz weist dabei nur ungestörte Trägerfrequenzen auf. Dadurch, daß eine als gestört erfaßte Trägerfrequenz ersetzt wird und nicht übersprungen wird durch Übergang zur folgenden Trägerfrequenz, werden die Positionen der ungestörten Trägerfrequenzen in der modifizierten Sequenz im Vergleich zur ursprünglichen Sequenz nicht verändert.

Grundlage dieser modifizierten Sequenz bestehend nur aus ungestörten Trägerfrequenzen fx sind also zwei überlagerte, voneinander unabhängige Prozeduren (Zufallsgenerator 22 bzw. Sperr-/Freigabeeinheit 21). Diese Sperrung kann von der Sperr-/Freigabeeinheit 21 wieder aufgehoben werden, sobald eine neuerliche Erfassung durch die Erfassungseinrichtung 24 anzeigt, daß die ehemals gestörte Trägerfrequenz nunmehr nicht mehr gestört ist. Für diesen Fall gibt die Sperr-/Freigabeeinheit 21 ein Freigabesignal zu dem Prozessor 23, das anzeigt, daß der Prozessor 23 die ehemals gestörte Trägerfrequenz nunmehr nicht mehr durch eine andere Trägerfrequenz ersetzen muß.

Alternativ kann die Sperr-/Freigabeeinheit 21 automatisch ohne neuerliche Erfassung durch die Erfassungseinrichtung 24 ein Freigabesignal an den Prozessor 23 ausgeben, sobald eine vorbestimmte Zeitdauer abgelaufen ist. Jede der genannten Prozeduren gewährleistet also für sich, daß das gesamte vorgegebene Frequenzspektrum gleich verteilt genutzt wird. Durch die Anpassung der Zeiten in der Prozedur zum Sperren von Frequenzen können somit Normen eingehalten werden.

Als Beispiel für eine solche Norm sei die US-Vorschrift FCC part 15 genannt. Diese Vorschrift schreibt vor, daß bei einem Frequency Hopping Spread Spectrum Systems innerhalb eines Zeitraums von 30 Sekunden mindestens 75 unterschiedliche Frequenzen genutzt werden müssen. Dabei darf jede Frequenz in 30 Sekunden maximal 0,4 Sekunden lang genutzt werden. Darüber hinaus müssen im Durchschnitt alle Frequenzen gleich verteilt genutzt werden.

Die Feststation 1 ist der Master bei der Frequenzzuweisung, d. h. zu Beginn eines Verbindungsaufbaus wird der Zufallszahlengenerator in einem Mobilteil mit dem Zustand des Zufallszahlengenerators 22 der Feststation 1 initialisiert. Anschließend erzeugen die Zufallszahlengeneratoren im Mobilteil 2, 3 ... und in der Feststation 1 synchron im Rahmentakt und autonom voneinander die gleichen Trägerfrequenz-Werte.

Das Mobilteil weist im wesentlichen den gleichen Aufbau auf wie die Feststation 1. Das Mobilteil umfaßt ebenso wie die Feststation 1 eine Trägerfrequenz-Sequenzeinheit 20 mit einem Zufallszahlengenerator 22 und einem Prozessor 23, der eine Tabelle 25 enthält. Die Tabelle 25 ist mit der Tabelle 25 der Feststation 1 identisch. Die Mobilstation weist jedoch nicht die Erfassungseinrichtung 24 und die Sperr-/Freigabeeinrichtung 21 auf. Gestörte Trägerfrequenzen werden nur in der Feststation bzw. Basisstation erfaßt und den entsprechenden Mobilstationen mitgeteilt. Eine Erfassung von gestörten Trägerfrequenzen kann auch in den Mobilstationen stattfinden, wobei in diesem Fall die Mobilstationen den in Fig. 3 gezeigten Aufbau aufweisen. Das Verfahren zum Übertragen von Informationen bzw. Daten in den entsprechenden Trägerfrequenzen in der Mobilstation entspricht dem entsprechenden Verfahren in der Basisstation.

Die Prozedur zur Frequenzsperrung, die durch die Erfassungseinrichtung 24 und die Sperr-/Freigabeeinheit 21 ausgeführt wird, verwendet während der gesamten Verbindungszeit zwischen der Feststation 1 und einem Mobilteil 2, 3 ... ein unidirektionales Protokoll auf der Luftschnittstelle. Wird von der Erfassungseinrichtung 24 eine der endmöglichen Frequenzen fx von der Feststation 1 als gestört befunden, so teilt also die Feststation 1 allen Mobilteilen, mit denen es aktive Verbindungen betreibt, mit, daß diese gestörte Frequenz, wenn sie durch die Frequenz des Zufallszahlengenerators erzeugt wird, durch eine andere, als nicht gestört erfaßte Trägerfrequenz zu ersetzen ist. Die Frequenzsperrung wird von der Sperr-/Freigabeeinheit 21 wieder zurückgenommen, wenn die gesperrte Trägerfrequenz zur Übertragung wieder geeignet ist bzw. wenn sie länger als eine vorher definierte Zeit gesperrt war.

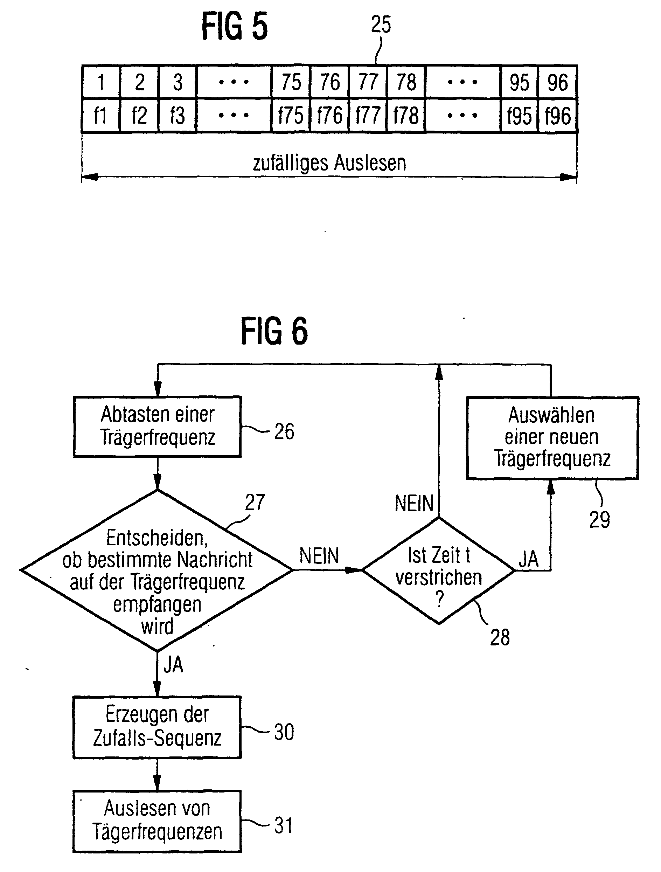

In Fig. 3 ist zu sehen, daß dem Prozessor 23 eine beispielsweise in einem Speicher vorgesehene Tabelle 25 zugeordnet ist. Bezugnehmend auf Fig. 3 sowie auf Fig. 5 bis Fig. 11 soll nun erläutert werden, wie erfindungsgemäß die Trägerfrequenzen fx bereitgestellt werden. Wie in Fig. 5 ersichtlich, werden sämtliche insgesamt zur Verfügung stehenden Trägerfrequenzen fx, beispielsweise 96, in eine Tabelle 25 eingetragen.

Wie in Figur 5 zu erkennen ist, sind die Trägerfrequenzwerte f₁ bis f₉₆ in ihrer numerischen Reihenfolge in entsprechenden Adressen 1 bis 96 der Tabelle 25 eingetragen. Diese Reihenfolge der Trägerfrequenzwerte fx ist jedoch nur als Beispiel gedacht. Die Trägerfrequenzwerte fx können beispielsweise auch in einer anderen Reihenfolge in der Tabelle 25 gespeichert sein.

Die Zahl der insgesamt vorhandenen Trägerfrequenzwerte fx, im vorliegenden Beispiel 96, wird mit N bezeichnet. Gemäß der US-Vorschrift FCC part 15 müssen mindestens 75 unterschiedliche Frequenzen in einem Zeitraum von 30 Sekunden genutzt werden.

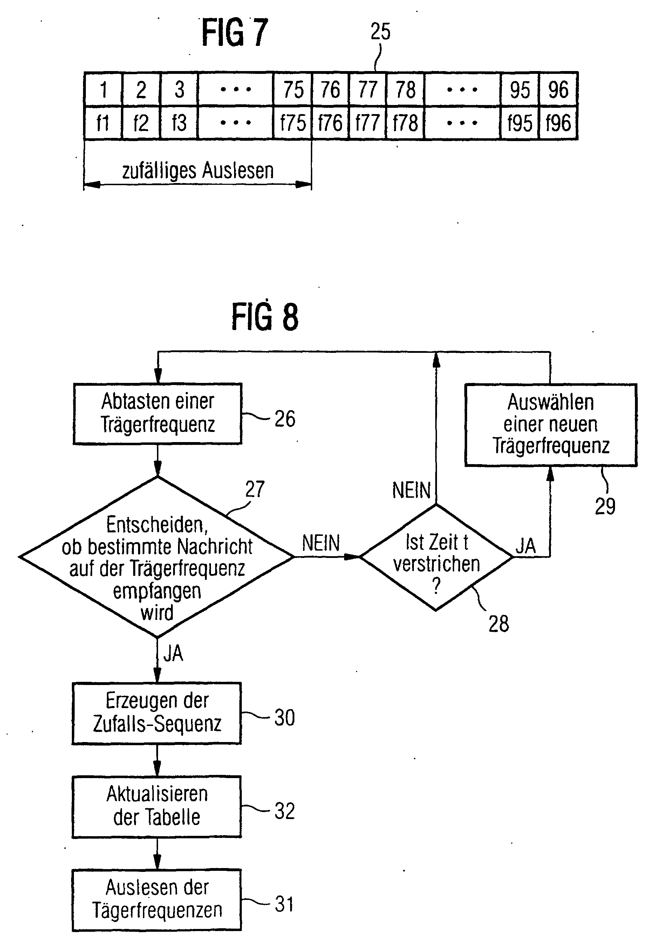

Im in den Figuren 5 und 6 erläuterten Beispiel wird angenommen, daß keine Trägerfrequenz gestört ist, so daß alle 96 Trägerfrequenzen zur Übertragung von Daten verwendet werden können. Beim in den Figuren 7 und 8 erläuterten Beispiel wird nur ein Teil M der 96 Trägerfrequenzen, nämlich 75 Trägerfrequenzen übertragen, die, falls eine von ihnen gestört ist, aus den restlichen 21 Trägerfrequenzen ersetzt werden können.

Die in der Tabelle 25 in der Mobilstation und in der Basisstation bzw. Feststation fest gespeicherte Tabelle 25 wird mittels eines Zufallszahlengenerators 22, der für die Basisstation und die Feststation identisch ist, ausgelesen. Die im Prozessor 23, der ebenfalls jeweils in der Basisstation und in der Mobilstation vorhanden ist, ausgelesenen Trägerfrequenzwerte fx werden im HF-Modul 4 in die entsprechenden Trägerfrequenzen umgesetzt. Daraufhin werden Daten bzw. Informationen in den Trägerfrequenzen übertragen. Jeder Trägerfrequenzwert fx ist in der Tabelle 25 nur ein einziges Mal vorhanden.

In Figur 6 ist ein Flußdiagramm dargestellt, das das Herstellen einer Verbindung zwischen einer Mobilstation und einer Basisstation bzw. das Synchronisieren einer Mobilstation auf eine Basisstation zeigt. In beiden Fällen sind die Verfahrensabläufe identisch. Der in Fig. 6 dargestellte Verfahrensablauf wird insbesondere in den Mobilstationen durchgeführt, die von der jeweiligen Basisstation abhängig sind. Jedem der in Figur 6 dargestellten Verfahrensschritte ist eine entsprechende Einrichtung in der jeweiligen Mobilfunkeinheit, die beispielsweise eine Mobilstation sein kann, zugeordnet. In einem ersten Schritt 26 wird in einer entsprechenden Einrichtung eine ausgewählte Trägerfrequenz abgetastet. In einem nächsten Schritt 27 wird in einer entsprechenden Einrichtung festgestellt bzw. entschieden, ob eine bestimmte Nachricht auf der ausgewählten Trägerfrequenz empfangen wurde. Die bestimmte Nachricht kann dabei beispielsweise eine Nₜ-Nachricht im A-Feld des DECT-Standards sein. In anderen Standards können andere entsprechende Nachrichten verwendet werden. Wird im Schritt 27 festgestellt, daß die bestimmte Nachricht nicht empfangen worden ist, wird in einem Schritt 28 in einer entsprechenden Einrichtung überprüft, ob eine bestimmte Zeitdauer t verstrichen ist. Ist die bestimmte Zeitdauer t nicht verstrichen, so wird das Abtasten der ausgewählten Trägerfrequenz im Schritt 26 fortgeführt. Ist die Zeitdauer t verstrichen, so wird in einem Schritt 29 in einer entsprechenden Einrichtung eine neue Trägerfrequenz ausgewählt. Die neue Trägerfrequenz wird entsprechend in dem Schritt 26 abgetastet.

Fällt die Entscheidung im Schritt 27 positiv aus, d.h. wird festgestellt, daß die bestimmte erwartete Nachricht auf der Trägerfrequenz empfangen wurde, wird in einem Schritt 30 in einer entsprechenden Einrichtung die durch den Zufallszahlengenerator 22 fest vorgegebene Zufallszahlensequenz erzeugt. Die bestimmte empfangene Nachricht wird dabei dazu verwendet, das Erzeugen der Zufallszahlensequenz in dem Zufallszahlengenerator 22 an der Position zu starten, an der sich die Mobileinheit, von der die bestimmte Nachricht empfangen wurde, gerade befindet. Das ist notwendig, um sicherzustellen, daß die beiden datenaustauschenden Mobilfunkeinheiten zueinander synchronisiert sind und synchron miteinander die Zufalls-Sequenz von Trägerfrequenzen zum Übertragen von Daten verwenden. Im Schritt 30 wird somit die Zufallszahlensequenz ab der durch die bestimmte Nachricht vorgegebenen Position erzeugt und zum Auslesen von Trägerfrequenzwerten ausgehend von der entsprechenden Adresse in der Tabelle 25 verwendet. Das Auslesen von Trägerfrequenzwerten fx erfolgt in einem Schritt 31 in einer entsprechenden Einrichtung im Prozessor 23 der entsprechenden Mobilfunkeinheit. Die Zufallszahlenwerte, die von dem Zufallszahlengenerator 22 erzeugt werden, werden dabei in Adressenwerte zwischen 1 und N umgesetzt, d.h. im vorliegenden Beispiel in Adressenwerte zwischen 1 und 96 mittels denen die Trägerfrequenzwerte fx aus der Tabelle 25 ausgelesen werden.

In Figur 7 ist eine Tabelle 25 dargestellt, bei der nur ein Teil M = 75 der insgesamt N = 96 Trägerfrequenzwerte fx aus entsprechenden Adressen 1 bis 75 ausgelesen werden. Wie oben bereits erwähnt wurde, müssen beispielsweise gemäß der US-Vorschrift FCC part 15 mindestens 75 unterschiedliche Frequenzen in einem Zeitraum von 30 Sekunden genutzt werden. Durch das Auslesen der ersten 75 Trägerfrequenzwerte aus den entsprechenden Adressen 1 bis 75 aus der Tabelle 25 gemäß Figur 7 wird dieses Erfordernis erfüllt. Die restlichen Trägerfrequenzwerte aus den Adressen 76 bis 96 können dabei zum Ersetzen bzw. Aktualisieren von gestörten Trägerfrequenzwerten in den ersten 75 Trägerfrequenzwerten verwendet werden. Der Zufallszahlengenerator 22 in der Mobilstation und der Basisstation gibt daher keine Sequenzen aus, die N verschiedene Werte aufweisen, sondern vielmehr genügt es, wenn er M verschiedene Werte entsprechend den tatsächlich verfügbaren Trägerfrequenzen ausgibt. Dabei wird beispielsweise, wie in Bezug auf Figur 3 erläutert wurde, in einer Feststation eine oder mehrere gestörte Trägerfrequenzen ermittelt. Die Feststation gibt daraufhin ein entsprechendes Signal an die Mobilstation, welche Frequenzen gestört sind. Die Trägerfrequenzwerte in der Tabelle 25 in der Basisstation und der Mobilstation, die gestörten Trägerfrequenzen entsprechen, werden daraufhin durch nicht gestörte Trägerfrequenzwerte aus den Adressen 76 bis 96 ersetzt. Selbstverständlich muß dieses Ersetzen und Aktualisieren der gestörten Trägerfrequenzwerte in der Basisstation und der Mobilstation synchron erfolgen. Weiterhin könnte das Feststellen gestörter Trägerfrequenzen auch in der jeweiligen Mobilstation erfolgen, die eine entsprechende Nachricht an zugeordnete Basisstationen versendet.

In Figur 8 ist ein Flußdiagramm dargestellt, daß das Herstellen einer Verbindung zwischen Mobilfunkeinheiten bzw. das Synchronisieren von Mobilfunkeinheiten erläutert, wenn nur ein Teil M der vorhandenen N Trägerfrequenzwerte aus der Tabelle 25 ausgelesen wird. Den entsprechenden Verfahrensschritten des Flußdiagrammes von Figur 8 sind entsprechende Einrichtungen in der jeweiligen Mobilfunkeinheit zugeordnet.

In einem ersten Schritt 26 wird in einer entsprechenden Einrichtung eine ausgewählte Trägerfrequenz abgetastet. In einem Schritt 27 wird in einer entsprechenden Einrichtung entschieden, ob eine bestimmte Nachricht auf der ausgewählten Trägerfrequenz empfangen wurde. Falls das nicht der Fall ist, wird in einem Schritt 28 festgestellt, ob eine Zeitdauer t verstrichen ist. Der Schritt 27 und der Schritt 28 können in einer gemeinsamen Einrichtung in einem gemeinsamen Schritt durchgeführt werden. Wird festgestellt, daß die Zeitdauer t nicht verstrichen ist, so wird die ausgewählte Trägerfrequenz im Schritt 26 weiter abgetastet. Wird festgestellt, daß die Zeitdauer t verstrichen ist, so wird in einem Schritt 29 in einer entsprechenden Einrichtung eine neue Trägerfrequenz ausgewählt und entsprechend im Schritt 26 abgetastet.

Fällt die Entscheidung im Schritt 27 positiv aus, d.h. wird festgestellt, daß eine bestimmte Nachricht auf der abgetasteten Trägerfrequenz empfangen wird, so wird die Zufallssequenz vom Zufallszahlengenerator 22 unter Verwendung der empfangenen Nachricht erzeugt. Die bestimmte Nachricht kann dabei beispielsweise im DECT-Standard die Nₜ-Nachricht im A-Feld sein. In anderen Standards können selbstverständlich andere Nachrichten verwendet werden. Die bestimmte Nachricht gibt dabei dem Zufallszahlengenerator 22 an, von welcher Position ausgehend die Zufallssequenz gestartet werden soll. In anderen Worten gibt die bestimmte Nachricht an, auf welcher Position sich der Zufallszahlengenerator 22 derjenigen Mobilfunkeinheit, die die bestimmte Nachricht aussendet, gerade befindet, so daß der zu synchronisierende Zufallszahlengenerator 22 der empfangenen Mobilfunkeinheit die Zufallssequenz ausgehend von der gleichen Position erzeugen kann.

In einem Schritt 32 wird in einer entsprechenden Einrichtung die Tabelle auf der Basis einer weiteren empfangenen Nachricht aktualisiert. Stellt beispielsweise die Basisstation fest, daß eine bestimmte Trägerfrequenz gestört ist, so übermittelt sie beispielsweise einer empfangenden Mobilstation eine Nachricht, welche Trägerfrequenz gestört ist, und durch welchen Trägerfrequenzwert aus den Adressen 76 bis 96 der Tabelle 25 der gestörte Trägerfrequenzwert ersetzt werden soll. In einem Schritt 31 werden daraufhin in einer entsprechenden Einrichtung die Trägerfrequenzen aus den Adressen 1 bis 75 der Tabelle 25 ausgelesen.

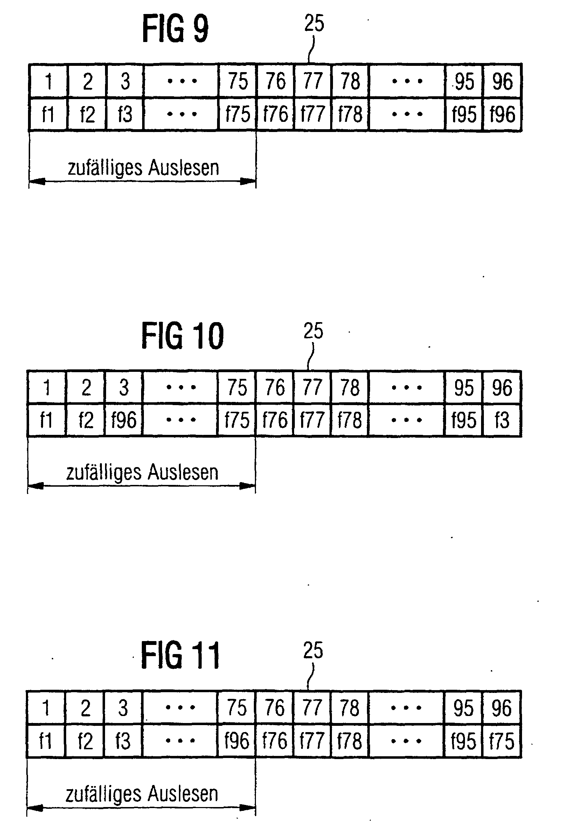

In den Figuren 9 bis 11 ist dargestellt, wie gestörte Trägerfrequenzwerte in den Adressen 1 bis 75 der Tabelle 25 durch nicht gestörte Trägerfrequenzwerte aus den Adressen 76 bis 96 ersetzt werden. Figur 9 zeigt dabei eine Tabelle 25, die der Tabelle 25 von Figur 7 entspricht. Ein Teil M, beispielsweise 75, von Trägerfrequenzwerten fx wird aus entsprechenden Adressen 1 bis M auf der Basis der von dem Zufallszahlengenerator 22 erzeugten Zufallszahlensequenz ausgelesen. Wird festgestellt, daß beispielsweise die Trägerfrequenz, die dem Trägerfrequenzwert f₃ entspricht, gestört ist, so wird der Trägerfrequenzwert f₉₆, der nicht gestört ist, mit dem Trägerfrequenzwert f₃ vertauscht, wie in Figur 10 dargestellt ist. Damit befindet sich der nicht gestörte Trägerfrequenzwert f₉₆ an der Adresse 3 und der gestörte Trägerfrequenzwert f₃ befindet sich an der Adresse 96. Da immer die Adressen 1 bis 75 auf der Basis der Zufallssequenz ausgelesen werden, ist somit gewährleistet, daß nur nicht gestörte Trägerfrequenzen zur Übertragung von Daten verwendet werden. Wird weiterhin festgestellt, daß die Trägerfrequenz, die dem Trägerfrequenzwert f₇₅ entspricht, gestört ist, und daß der Trägerfrequenzwert f₃ nicht mehr gestört ist, so wird zuerst der Trägerfrequenzwert f₃ auf seine ursprüngliche Adresse 3 zurückgesetzt und der Trägerfrequenzwert f₉₆ wird auf seine ursprüngliche Adresse 96 zurückgesetzt. Daraufhin wird der gestörte Trägerfrequenzwert f₇₅ auf die Adresse 96 gesetzt und der nicht gestörte Trägerfrequenzwert f₉₆ wird auf die Adresse 75 gesetzt, wie in Fig. 11 gezeigt wird. Da die Tabelle fest vorgegeben ist, wird somit sichergestellt, daß die Trägerfrequenzwerte immer an ihren festen Adressen vorhanden sind, außer wenn sie gestört sind.

Die Werte N = 96 und M = 75 sind in der obigen Beschreibung lediglich beispielhaft und können durch andere Werte je nach den Erfordernissen des zu erfüllenden Standards ersetzt werden.

## Patentansprüche

1. Verfahren zur Übertragung von Informationen in verschiedenen Trägerfrequenzen mittels einem Frequenzsprungverfahren, mit den folgenden Schritten
Bereitstellen einer Tabelle (25) mit einer Anzahl von N möglichen Trägerfrequenzwerten fx in Adressen 1 bis N der Tabelle (25),
Erzeugen (22) einer Sequenz von Zufallswerten,
Auslesen zumindest eines Teils M der N Trägerfrequenzwerte fx auf der Basis der erzeugten Sequenz von Zufallswerten aus den entsprechenden Adressen der Tabelle (25), wobei M≤N, und Übertragen (4, 6) von Informationen in den entsprechenden Trägerfrequenzen, wobei zum Herstellen einer Verbindung folgende Schritte durchgeführt werden:
Abtasten (26) einer Trägerfrequenz,
Entscheiden (27), ob während einem bestimmten Zeitraum eine zumindest eine Initialisierungsinformation beinhaltende Nachricht auf dieser Trägerfrequenz empfangen wurde,
falls die Entscheidung negativ ist, Auswählen einer neuen Trägerfrequenz und Abtasten dieser neuen Trägerfrequenz,
falls die Entscheidung positiv ist, Erzeugen (30) der Sequenz von Zufallswerten unter Verwendung zumindest der Initialisierungsinformation.

2. Verfahren nach Anspruch 1,
**dadurch gekennzeichnet,**
**daß** die erzeugte Sequenz von Zufallswerten in Adressenwerte zwischen 1 und N umgesetzt wird, mittels denen die Trägerfrequenzwerte aus der Tabelle (25) ausgelesen werden.

3. Verfahren nach Anspruch 1 oder 2,
**dadurch gekennzeichnet,**
**daß** zum Synchronisieren folgende Schritte durchgeführt werden Abtasten (26) einer Trägerfrequenz,
Entscheiden (27), ob während einem bestimmten Zeitraum eine Nachricht auf dieser Trägerfrequenz empfangen wurde,
falls die Entscheidung negativ ist, Auswählen einer neuen Trägerfrequenz und Abtasten dieser neuen Trägerfrequenz,
falls die Entscheidung positiv ist, Erzeugen (30) der Sequenz von Zufallswerten unter Verwendung der Nachricht.

4. Verfahren nach einem der vorhergehenden Ansprüche,
**dadurch gekennzeichnet,**
**daß** ein Teil M der N möglichen Trägerfrequenzwerte aus der Tabelle (25) ausgelesen wird, wobei die restlichen N-M Trägerfrequenzwerte zum Ersetzen von gestörten Trägerfrequenzwerten der M Trägerfrequenzwerte verwendet werden.

5. Verfahren nach Anspruch 4,
**dadurch gekennzeichnet,**
**daß** die Tabelle (25) vor dem Auslesen unter Ersetzen der Trägerfrequenzwerte, die gestörten Trägerfrequenzen entsprechen, aus den N-M Trägerfrequenzwerten aktualisiert (31) wird.

6. Vorrichtung zur Übertragung von Informationen in verschiedenen Trägerfrequenzen mittels einem Frequenzsprungverfahren, mit
einer Einrichtung (23) zum Bereitstellen einer Tabelle (25) mit einer Anzahl von N möglichen Trägerfrequenzwerten fx in Adressen 1 bis N der Tabelle (25),
einer Einrichtung (22) zum Erzeugen einer Sequenz von Zufallswerten,
einer Einrichtung (23) zum Auslesen zumindest eines Teils M der N Trägerfrequenzwerte fx auf der Basis der erzeugten Sequenz von Zufallswerten aus den entsprechenden Adressen der Tabelle (25), wobei M≤N, und
einer Einrichtung (4, 6) zum Übertragen von Informationen in den entsprechenden Trägerfrequenzen, wobei eine Einrichtung zum Herstellen zum Herstellen einer Verbindung vorgesehen ist, die umfaßt:
Mittel (26) zum Abtasten einer Trägerfrequenz,
Mittel (27) zum Entscheiden, ob während einem bestimmten Zeitraum eine zumindest eine Initialisierungsinformation beinhaltende Nachricht auf dieser Trägerfrequenz empfangen wurde, derart ausgestaltet, daß bei negativer Entscheidung eine neue Trägerfrequenz ausgewählt und diese neue Trägerfrequenz abgetastet wird, und bei positiver Entscheidung, die Sequenz von Zufallswerten unter Verwendung zumindest der Initialisierungsinformation erzeugt wird.

7. Vorrichtung nach Anspruch 6,
**gekennzeichnet durch**
eine Einrichtung zum Umsetzen der erzeugten Sequenz von Zufallswerten in Adressenwerte zwischen l und N, mittels denen die Trägerfrequenzwerte aus der Tabelle (25) ausgelesen werden.

8. Vorrichtung nach Anspruch 6 oder 7,
**dadurch gekennzeichnet,**
**daß** eine Einrichtung zum Synchronisieren vorgesehen ist, die umfaßt:
Mittel (26) zum Abtasten einer Trägerfrequenz,
Mittel (27) zum Entscheiden, ob während einem bestimmten Zeitraum eine zumindest eine Initialisierungsinformation beinhaltende Nachricht auf dieser Trägerfrequenz empfangen wurde, derart ausgestaltet, daß bei negativer Entscheidung eine neue Trägerfrequenz ausgewählt und diese neue Trägerfrequenz abgetastet wird, und bei positiver Entscheidung, die Sequenz von Zufallswerten unter Verwendung zumindest der Initialisierungsinformation erzeugt wird.

9. Vorrichtung nach einem der Ansprüche 6 bis 8,
**dadurch gekennzeichnet,**
**daß** die Einrichtung (31) zum Auslesen einen Teil M der N möglichen Trägerfrequenzwerte aus der Tabelle ausliest, wobei die restlichen N-M Trägerfrequenzwerte zum Ersetzen von gestörten Trägerfrequenzwerten der M Trägerfrequenzwerte verwendet werden.

10. Vorrichtung nach Anspruch 9,
**gekennzeichnet durch**
eine Einrichtung (32) zum Aktualisieren, die die Tabelle vor dem Auslesen unter Ersetzen der Trägerfrequenzwerte, die gestörten Trägerfrequenzen entsprechen, aus den N-M Trägerfrequenzwerten aktualisiert.

## Claims

1. Method for transmitting information at different carrier frequencies by means of a frequency-hopping method, having the following steps:
production of a table (25) with a total of N possible carrier frequency values fx at addresses 1 to N in the table (25),
production (22) of a sequence of random values,
reading of at least some M of the N carrier frequency values fx on the basis of the produced sequence of random values from the corresponding addresses in the table (25), where M ≤ N, and transmission (4, 6) of information at the corresponding carrier frequencies, with the following steps being carried out in order to produce a connection:
scanning (26) of a carrier frequency,
deciding (27) whether a message containing at least one initialization information item has been transmitted on this carrier frequency in a specific time period,
if the decision is negative, selecting a new carrier frequency and scanning this new carrier frequency,
if the decision is positive, producing (30) the sequence of random values using at least that initialization information item.

2. Method according to Claim 1,
**characterized**
**in that** the produced sequence of random values is converted to address values between 1 and N, by means of which the carrier frequency values are read from the table (25).

3. Method according to Claim 1 or 2,
**characterized**
**in that** the following steps are carried out for synchronization:
scanning (26) of a carrier frequency,
deciding (27) whether a message has been received at this carrier frequency during a specific time period,
if the decision is negative, selecting a new carrier frequency and scanning this new carrier frequency,
if the decision is positive, producing (30) the sequence of random values using that message.

4. Method according to one of the preceding claims,
**characterized**
**in that** some M of the N possible carrier frequency values are read from the table (25), with the remaining N-M carrier frequency values being used to replace disturbed carrier frequency values in the M carrier frequency values.

5. Method according to Claim 4,
**characterized**
**in that**, before being read, the table (25) is updated (31) from the N-M carrier frequency values, with the carrier frequency values which correspond to disturbed carrier frequencies being replaced.

6. Apparatus for transmitting information at different carrier frequencies by means of a frequency hopping method, having
a device (23) for producing a table (25) with a total of N possible carrier frequency values fx at addresses 1 to N in the table (25),
a device (22) for producing a sequence of random values,
a device (23) for reading at least some M of the N carrier frequency values fx on the basis of the produced sequence of random values from the corresponding addresses in the table (25), where M ≤ N, and
a device (4, 6) for transmitting information at the corresponding carrier frequencies, with a device being provided for producing a connection, which comprises:
means (26) for scanning a carrier frequency,
means (27) for deciding whether a message which contains at least one initialization information item has been received at this carrier frequency within a specific time period, such that, if the decision is negative, a new carrier frequency is selected and this new carrier frequency is scanned, and, if the decision is positive, the sequence of random values is produced using at least that initialization information item.

7. Apparatus according to Claim 6,
**characterized by**
a device for converting the produced sequence of random values to address values between 1 and N, by means of which the carrier frequency values are read from the table (25).

8. Apparatus according to Claim 6 or 7,
**characterized .**
**in that** a device is provided for synchronization, which device comprises:
means (26) for scanning a carrier frequency,
means (27) for deciding whether a message which contains at least one initialization information item has been received at this carrier frequency during a specific time period, designed such that, if the decision is negative, a new carrier frequency is selected and this new carrier frequency is scanned, and, if the decision is positive, the sequence of random values is produced using at least that initialization information item.

9. Apparatus according to one of Claims 6 to 8,
**characterized**
**in that** the device (31) for reading reads some M of the N possible carrier frequency values from the table, with the remaining N-M carrier frequency values being used to replace disturbed carrier frequency values from the M carrier frequency values.

10. Apparatus according to Claim 9,
**characterized by**
a device (32) for updating, which updates the table before reading from the N-M carrier frequency values, with the carrier frequency values which correspond to disturbed carrier frequencies being replaced.

## Revendications

1. Procédé à diversité en fréquence porteuse destiné à la transmission d'informations par un procédé à sauts de fréquence, selon les étapes suivantes
- mise à disposition d'un tableau (25) avec un nombre de N valeurs de fréquences porteuses possibles fx en adresses 1 à N du tableau (25),
- création (22) d'une séquence de valeurs aléatoires,
- extraction d'au moins une partie M des N valeurs de fréquences porteuses fx, sur la base de la séquence créée à partir de valeurs aléatoires provenant des adresses correspondantes du tableau (25), où M ≥ N, et transmission (4, 6) d'informations dans les fréquences porteuses correspondantes, les étapes suivantes étant exécutées pour l'établissement d'une liaison :
- analyse (26) d'une fréquence porteuse,
- décision (27), pour savoir si pendant une période définie un message contenant au moins une information d'initialisation a été reçu sur cette fréquence porteuse,
- si la décision est négative, sélection d'une nouvelle fréquence porteuse et analyse de cette nouvelle fréquence porteuse,
- si la décision est positive, création (30) de la séquence de valeurs aléatoires en utilisant au moins l'information d'initialisation.

2. Procédé selon la revendication 1, **caractérisé en ce que** la séquence créée à partir de valeurs aléatoires est convertie en valeurs d'adresse comprises entre 1 et N, au moyen desquelles les valeurs de fréquences porteuses sont extraites du tableau (25).

3. Procédé selon l'une quelconque des revendications 1 ou 2, **caractérisé en ce que** les étapes suivantes sont exécutées pour la synchronisation :
- analyse (26) d'une fréquence porteuse,
- décision (27) pour savoir si pendant une période définie un message a été reçu sur cette fréquence porteuse,
- si la décision est négative, sélection d'une nouvelle fréquence porteuse et analyse de cette nouvelle fréquence porteuse,
- si la décision est positive, création (30) de la séquence de valeurs aléatoires en utilisant le message.

4. Procédé selon l'une quelconque des revendications précédentes, **caractérisé en ce qu'**une partie M des N valeurs de fréquences porteuses possibles est extraite du tableau (25), les valeurs restantes de fréquences porteuses N-M étant utilisées pour remplacer des valeurs perturbées de fréquences porteuses faisant partie des M valeurs de fréquences porteuses.

5. Procédé selon la revendication 4, **caractérisé en ce que** le tableau (25) est actualisé (31), à partir des valeurs de fréquences porteuses N-M, avant l'extraction faite en remplaçant les valeurs de fréquences porteuses, qui correspondent aux valeurs de fréquences porteuses perturbées.

6. Dispositif à diversité en fréquence porteuse destiné à la transmission d'informations par un procédé à sauts de fréquence, doté
- d'un dispositif (23) pour la mise à disposition d'un tableau (25) avec un nombre de N valeurs de fréquences porteuses possibles fx en adresses 1 à N du tableau (25),
- d'un dispositif (22) pour la création d'une séquence de valeurs aléatoires,
- d'un dispositif (23) pour l'extraction d'au moins une partie M des N valeurs de fréquences porteuses fx, sur la base de la séquence créée à partir de valeurs aléatoires provenant des adresses correspondantes du tableau (25), où M ≥ N, et
- d'un dispositif (4, 6) pour la transmission d'informations dans les fréquences porteuses correspondantes, un dispositif étant prévu pour la création de l'établissement d'une liaison, dispositif qui comprend :
- des moyens (26) d'analyse d'une fréquence porteuse,
- des moyens (27) de décision pour savoir si pendant une période définie un message contenant au moins une information d'initialisation a été reçu sur cette fréquence porteuse,
- réalisé de telle sorte que si la décision est négative, une nouvelle fréquence porteuse est sélectionnée et que cette nouvelle fréquence porteuse est analysée, et que si la décision est positive, la séquence de valeurs aléatoires est créée en utilisant au moins l'information d'initialisation.

7. Dispositif selon la revendication 6, **caractérisé par** un dispositif pour convertir la séquence créée à partir de valeurs aléatoires, en valeurs d'adresse comprises entre 1 et N, au moyen desquelles les valeurs de fréquences porteuses sont extraites du tableau (25).

8. Dispositif selon l'une quelconque des revendications 6 ou 7, **caractérisé en ce qu'**un dispositif est prévu pour la synchronisation, qui comprend:
- des moyens (26) d'analyse d'une fréquence porteuse,
- des moyens (27) de décision pour savoir si pendant une période définie un message contenant au moins une information d'initialisation a été reçu sur cette fréquence porteuse,
- réalisé de telle sorte que si la décision est négative, une nouvelle fréquence porteuse est sélectionnée et cette nouvelle fréquence porteuse est analysée, et que si la décision est positive, la séquence de valeurs aléatoires est créée en utilisant au moins l'information d'initialisation.

9. Dispositif selon l'une quelconque des revendications 6 à 8, **caractérisé en ce que** le dispositif (31) d'extraction extrait à partir du tableau (25) une partie M des N valeurs de fréquences porteuses possibles, les valeurs restantes de fréquences porteuses N-M étant utilisées pour remplacer des valeurs perturbées de fréquences porteuses faisant partie des M valeurs de fréquences porteuses.

10. Dispositif selon la revendication 9, **caractérisé par** un dispositif (32) d'actualisation qui actualise le tableau, à partir des valeurs de fréquences porteuses N-M, avant l'extraction faite en remplaçant les valeurs de fréquences porteuses, qui correspondent aux valeurs de fréquences porteuses perturbées.
